# EUROPÄISCHE PATENTSCHRIFT

(11) **EP 2 026 990 B1**
(45) Veröffentlichungstag und Bekanntmachung des Hinweises auf die Patenterteilung: **12.03.2014**
(21) Anmeldenummer: 07722515.9
(22) Anmeldetag: 05.06.2007
(51) Int. Cl.: B60K 17/00, G01L 5/00, G01K 5/12

(54) **LAGERUNGSANORDNUNG MIT INTEGRIERTER DREHMOMENTMESSUNG UND VORRICHTUNG ZUR REGELUNG EINER MOMENTENVERTEILUNG**
MOUNTING DEVICE WITH INTEGRATED TORQUE MEASUREMENT AND DEVICE FOR THE CONTROL OF TORQUE DISTRIBUTION
ENSEMBLE PALIER AVEC MESURE DE COUPLE INTEGRÉE ET DISPOSITIF DE RÉGULATION D'UNE RÉPARTITION DES COUPLES

(30) Priorität: 10.06.2006 DE 102006027090
(43) Veröffentlichungstag der Anmeldung: 25.02.2009
(73) Patentinhaber: Schaeffler Technologies AG & Co. KG, 91074 Herzogenaurach (DE)
(72) Erfinder: HEIM, Jens, 97493 Bergrheinfeld (DE); LANGER, Roland, 97523 Schwanfeld (DE); NIEBLING, Peter, 97688 Bad Kissingen (DE); MOCK, Christian, 97421 Schweinfurt (DE)
(86) Internationale Anmeldenummer: PCT/DE2007/001004
(87) Internationale Veröffentlichungsnummer: WO 2007/140762

(56) Entgegenhaltungen:
- EP-A- 1 550 813
- WO-A-02/08048
- WO-A-03/019126
- WO-A-2005/003709
- DE-A1- 3 636 243
- DE-A1- 19 919 031
- JP-A- 8 200 384
- US-A1- 2006 045 400

## Beschreibung

### Gebiet der Erfindung

Die Erfindung betrifft eine Lagerungsanordnung zur Lagerung eines angetriebenen bzw. antreibbaren Rades eines Fahrzeuges. Die erfindungsgemäße Lagerungsanordnung ermöglicht die Messung des Drehmomentes, welches zwischen dem Rad und einer Antriebswelle wirkt. Im Weiteren betrifft die Erfindung eine Vorrichtung zur Regelung der Verteilung der auf die antreibbaren Räder eines Fahrzeuges wirkenden Antriebs- und Schleppdrehmomente.

Kraftfahrzeuge, bei denen insbesondere alle vier Räder angetrieben werden, werden zunehmend mit einer Steuerung zur Antriebsmomentenverteilung ausgestattet, wodurch eine verbesserte Fahrzeugquerdynamik bei gleichzeitiger Erhöhung der Fahrsicherheit erzielt wird. Für die Steuerung der Antriebsmomentenverteilung bedarf es geeigneter Messeinrichtungen, um die jeweilige Fahrsituation bestimmen zu können.

Aus der DE 41 12 904 A1 ist eine Antriebsmoment-Verteilungssteuervorrichtung für Fahrzeuge bekannt, die eine Kupplung zur Veränderung der Momentenverteilung zwischen ersten und zweiten Antriebsrädern aufweist.

Die Kupplung wird durch ein Steuersignal gesteuert, welches auf Basis der Messwerte eines Beschleunigungspositionssensors und eines Querbeschleunigungssensors bestimmt wird. Nachteilig an dieser Lösung ist die begrenzte Genauigkeit, mit der die jeweilige Fahrsituation bestimmt werden kann. Die auf die Räder tatsächlich wirkenden Drehmomente werden bei dieser Lösung nicht ermittelt.

Es sind verschiedene weitere Lösungen für eine Erfassung anderer Größen bekannt, alle mit dem Ziel der Bestimmung der Momentenverteilung.

In diesem Zusammenhang ist aus der DE 689 28 004 T2 eine Anordnung zur Steuerung der Kraftübertragung eines vierrad-getriebenen Fahrzeuges bekannt, bei dem die Veränderung der Antriebsmomentenverteilung u. a. auch abhängig von dem aktuellen Lenkwinkel, der Gaspedalstellung, der Motorleistung und der Bremskraft gewählt wird.

In der DE 40 31 890 A1 wird vorgeschlagen, die Differenz der Drehzahlen der Vorder- und Hinterräder zu bestimmen. Aus der DE 41 33 060 A1 ist es bekannt, zusätzlich das durch den Seitenwind erzeugte Windgiermoment zu bestimmen. Allen genannten Lösungen ist gemein, dass die Bestimmung der Momentenverteilung nur indirekt erfolgt, sodass die erzielte Genauigkeit in vielen Fahrsituationen nicht befriedigend ist.

Aus der DE 195 14 093 B4 ist es bekannt, die Torsion in den Radantriebsachsen eines Fahrzeuges mit Geschwindigkeitssensoren an den Radantriebswellen zu bestimmen. Hierfür ist die Bestimmung weiterer Kenngrößen, wie der Umdrehungsgeschwindigkeit, der Antriebseinheit und der Drosselklappenöffnung notwendig. Vorteilhaft an dieser Lösung ist die Messung von Kenngrößen direkt an den Antriebswellen. Nachteilig ist wiederum die Indirektheit der Bestimmung der in den Antriebswellen wirkenden Drehmomente, wodurch nur eine begrenzte Genauigkeit ermöglicht ist.

Aus der DE 103 38 172 B3 ist eine Radnaben-Drehgelenk-Anordnung bekannt, wie sie in dieser oder ähnlichen Ausführungen vielfach zur Lagerung von antreibbaren Rädern von Kraftfahrzeugen Verwendung findet. Bei diesen Lösungen weist ein Zapfen an einem Drehgelenk einer Antriebswelle eine Außenverzahnung auf, die in eine Innenverzahnung einer Radnabe eingreift, wodurch das Antriebsdrehmoment übertragen werden kann. Die Radnabe ist im Bereich des eingreifenden Zapfens in einem zweireihigen Kugellager eines Radträgers gelagert. Eine alternative Lösung zur Radlagerung ist aus der DE 36 04 630 C2 bekannt, bei der die Ubertragung des Antriebsdrehmomentes vom Drehgelenk der Antriebswelle über eine Stirnverzahnung auf die Radnabe erfolgt. Die Radnabe bildet gleichzeitig den Lagerinnenring des zweireihigen Kugellagers zur Lagerung des Rades. Für die angeführten Lösungen zur Lagerung eines über ein Drehgelenk angetriebenen Rades ist keine Lösung bekannt, das auf das Rad wirkende Drehmoment zu bestimmen. Aus DE 36 36 243 A1 ist eine weitere Radlagerung bekannt, die alle Merkmale des Oberbegriffs des Anspruchs 1 offenbart.

Eine Aufgabe der vorliegenden Erfindung besteht somit darin, eine Lagerungsanordnung zur Lagerung eines antreibbaren Rades eines Fahrzeuges zur Verfügung zu stellen, welche eine direkte Messung des zwischen dem Rad und der Antriebswelle wirkenden Drehmomentes ermöglicht.
Diese Aufgabe wird gelöst durch eine Lagerungsanordnung gemäß dem beigefügten unabhängigen Anspruch 1, bei der die Ubertragung von Antriebs- und Schleppdrehmomenten zwischen einem Rad und einer Antriebswelle über eine Stirnverzahnung an einem Lagerinnenring erfolgt.

Ein druckempfindliches Messelement ist axial neben der Stirnverzahnung angeordnet und für dort auftretende Axialkräfte empfindlich. Mit diesem Messelement kann eine axial wirkende Kraft bestimmt werden, die direkt proportional zu dem wirkenden Drehmoment ist, da das wirkende Drehmoment an schrägen Zähnen der Stirnverzahnung teilweise in eine axial wirkende Kraftkomponente umgewandelt wird.

Zur Messung der Antriebs- und Schleppdrehmomentenverteilung ist an den antreibbaren Rädern jeweils eine Sensoreinheit zur Messung des auf das jeweilige Rad wirkenden Drehmomentes angeordnet.

Ein wichtiger Vorteil der erfindungsgemäßen Lagerungsanordnung besteht darin, dass hierfür nur wenige konstruktive Änderungen gegenüber konventionellen Lagerungsanordnungen notwendig sind. Die bestehende Produktionstechnik muss lediglich für eine Montage des Messelementes und des Sensors erweitert werden.

Erfindungsgemäß ist das druckempfindliche Messelement an einem Kragen des Lagerinnenrings angeordnet.

Weiterhin kann dabei der Lagerinnenring eine Ausnehmung aufweisen, welche zumindest abschnittsweise axial neben der Stirnverzahnung im Lagerinnenring verläuft, in welcher Ausnehmung des Lagerinnenringes das druckempfindliche Messelement angeordnet ist. Besonders bevorzugt kann vorgesehen sein, dass die Ausnehmung als Nut ausgebildet ist, die umlaufend im Lagerinnenring angeordnet ist.

Weiterhin vorzugsweise ist die Nut unmittelbar axial neben der Stirnverzahnung in dem Lagerinnenring angeordnet, d. h. der Lagerinnenring weist zwischen der Bodenfläche der Verzahnung und der Nut eine axiale Länge auf, die gerade notwendig ist, damit die Stirnverzahnung die auftretenden Beanspruchungen aufnehmen kann. Bei dieser Ausführungsform wird die durch das wirkende Drehmoment an der Stirnverzahnung hervorgerufene axiale Kraft weitestgehend auf das druckempfindliche Messelement übertragen, so dass eine genaue Messung möglich ist.

Alternativ kann auch eine Anlagefläche oder ähnliches - in entsprechender Position - am Lagerinnenring vorgesehen sein, an welcher das druckempfindliche Messelement angeordnet ist.

Das Messelement kann durch einen Messring gebildet sein, dessen Material einen ausgeprägten inversen magnetostriktiven oder magnetoelastischen Effekt aufweist. Die aufgrund der Krafteinwirkung hervorgerufene Formänderung bewirkt eine Veränderung des Magnetfeldes, die mit einem oder mehreren geeigneten Sensoren bestimmt werden kann. Der oder die Sensoren sind am Lageraußenring oder Radträger befestigt und befinden sich im veränderlichen Magnetfeld des Messringes. Insbesondere steht er bzw. stehen sie dem druckempfindlichen Messelement, beispielsweise angeorndet in der Ausnehmung des Lagerinnenringes, gegenüber.

Bevorzugt ist der Sensor auf dem Lageraußenring an einer Position angeordnet, die sich innerhalb einer durch eine Radseitenkraft ergebenden Kippachse befindet. Hierdurch wird die Querbeeinflussung durch die Radseitenkraft minimiert und die Messgenauigkeit erhöht.

Bei dieser Ausführungsform kann auch ein zweiter Sensor auf dem Lageraußenring angeordnet werden, wobei sich der zweite Sensor ebenfalls in der genannten Kippachse befindet und dem ersten Sensor auf dem Umfang des Lageraußenringes gegenübersteht.

Das Messelement kann in abgewandelten Ausführungsformen auch durch andere druckempfindliche Materialen oder Sensorelemente oder auch durch eine druckempfindliche Beschichtung auf einem Messelementträger gebildet sein, die mit dem oder den Sensoren am Lageraußenring ausgelesen werden.

Bevorzugt ist das ringförmige Messelement in Segmente unterteilt, die zyklisch oder gleichzeitig ausgelesen werden. Bei einem gleichzeitigen Auslesen der einzelnen Segmente können die Messwerte je nach Lage der Sensoren gewichtet summiert werden, um einer Querbeeinflussung durch eine Radseitenkraft zu minimieren. Bei einer anderen Gewichtung für die Summation ist das Kippmoment bestimmbar, sodass sich bei bekanntem Reifenradius die Radseitenkraft ableiten lässt.

Vorzugsweise ist die erfindungsgemäße Lagerungsanordnung als zweireihiges Kugellager ausgeführt, wobei der Lagerinnenring durch einen Ansatz an der Nabe des Rades gebildet wird. Eine solche Ausführung erlaubt eine reibungsarme Lagerung, eine kompakte Bauform und eine sichere Übertragung großer Drehmomente.

Ein wichtiger Vorteil der Vorrichtung zur Regelung der Antriebsmomente von antreibbaren Rädern eines Fahrzeuges ist, dass die Beeinflussung der Momentenverteilung in Abhängigkeit von den tatsächlich auftretenden Drehmomenten der einzelnen Räder erfolgt. Es bedarf keiner Messwerte für Beschleunigungskomponenten, Lenkwinkel o. ä., mit denen die erforderliche Beeinflussung der Momentenverteilung bislang lediglich abgeschätzt werden konnte. Mit der erfindungsgemäßen Lagerungsanordnung ist es nunmehr möglich, das tatsächlich auf das Rad wirkende Drehmoment zu bestimmen und diese Werte für die erfindungsgemäße Regelung zu verwenden. Weitere Vorteile, Einzelheiten und Weiterbildungen der Erfindung ergeben sich aus der nachfolgenden Beschreibung mehrerer Ausführungsformen, unter Bezugnahme auf die Zeichnungen. Es zeigen:
- Fig. 1: eine Seitenansicht einer bevorzugten Ausführungsform einer erfindungsgemäßen Lagerungsanordnung;
- Fig. 2: eine Perspektivansicht der in Fig. 1 gezeigten Lagerungsanordnung; und
- Fig. 3: eine Detailansicht einer in den Fig. 1 und 2 gezeigten Lagerungsanordnung.

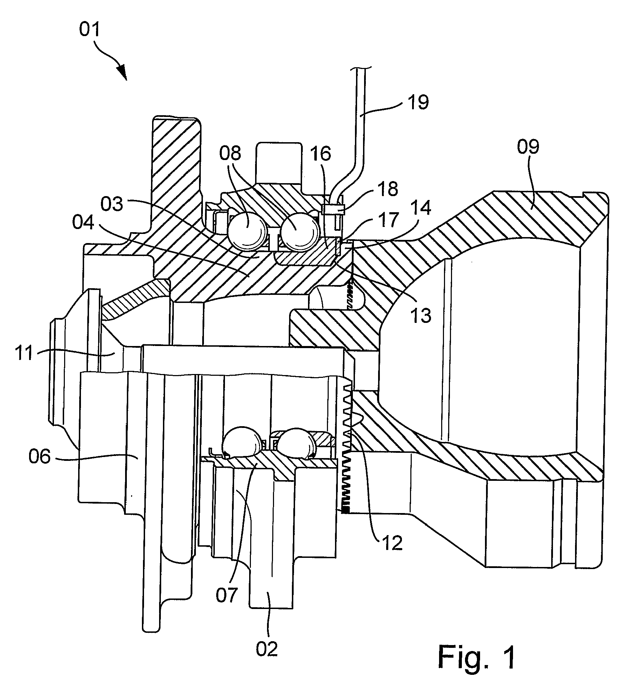

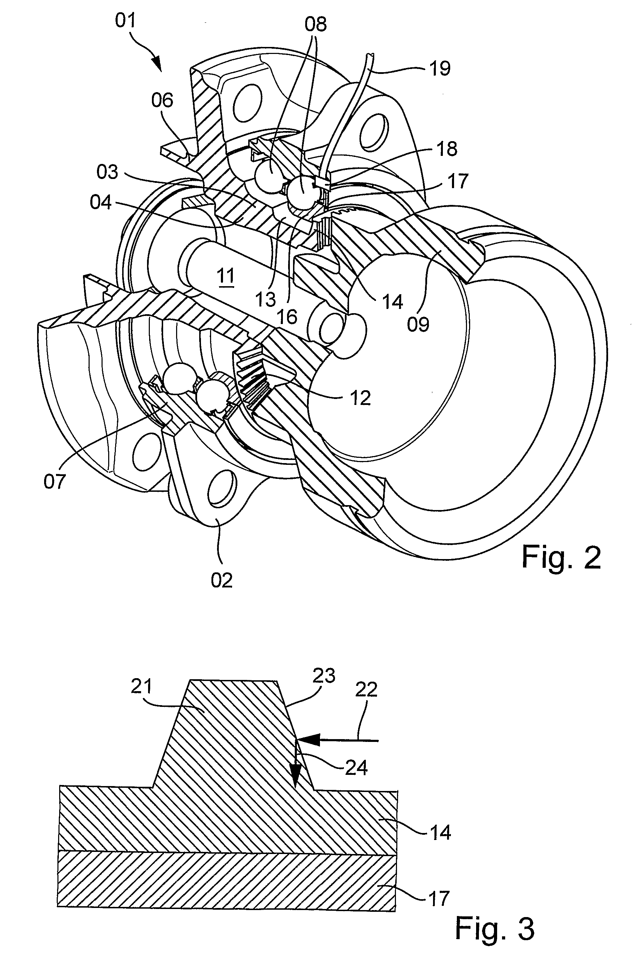

Fig. 1 zeigt eine teilweise geschnittene seitliche Ansicht und Fig. 2 zeigt eine perspektivische Ansicht einer Lagerungsanordnung 01 zur Lagerung eines antreibbaren Rades an einem Radträger 02 eines Fahrzeuges. Die Lagerungsanordnung 01 umfasst einen Lagerinnenring 03, der durch einen Ansatz 04 an einer Nabe 06 des Rades gebildet ist. Ein Lageraußenring 07 ist im Radträger 02 ausgebildet. Der Lagerinnenring und der Lageraußenring können auch als eigenständige Teile ausgebildet sein, die mit der Radnabe 06 bzw. dem Radträger 02 fest verbunden sind. Die Lagerungsanordnung 01 ist hier als ein zweireihiges Kugellager ausgeführt, bei welchem Kugeln 08 als Wälzkörper fungieren. Die erfindungsgemäße Lagerungsanordnung kann aber auch als beliebiges Wälzlager oder auch als Gleitlager ausgeführt werden.

Die Radnabe 06 ist an einem Drehgelenk 09 befestigt. Das Drehgelenk 09 ist mit einer Antriebswelle (nicht gezeigt) verbunden und überträgt Drehmomente von der Antriebswelle zur Radnabe 06. Die Radnabe 06 ist mit einer Schraube 11 mit dem Drehgelenk 09 verbunden. Diese Verbindung erzeugt eine axiale Anpresskraft der Radnabe 06 an das Drehgelenk 09. Diese Verbindung ist allein jedoch nicht geeignet, um die auftretenden Drehmomente zu übertragen. Hierfür weisen die stirnseitigen Auflageflächen zwischen der Radnabe 06 und dem Drehgelenk 09 jeweils eine Stirnverzahnung 12 auf. Die Stirnverzahnung 12 ermöglicht eine sichere Übertragung der auftretenden Drehmomente zwischen der Radnabe 06 und dem Drehgelenk 09. Gleichzeitig erlaubt diese Art der Verbindung eine schnelle Montage und Demontage der Radnabe 06.

Der Lagerinnenring 03 weist axial neben der Stirnverzahnung 12 eine Ausnehmung in Form einer umlaufenden Nut 13 auf. Hierdurch erfährt der Lagerinnenring 03 im Bereich zwischen der Nut 13 und der Stirnverzahnung 12 eine Materialschwächung und ist als ein Kragen 14 ausgebildet. Der Kragen 14 besitzt eine axiale Länge von nur einigen Millimetern, wobei diese mit zunehmendem Radius abnimmt. Die axiale Länge des Kragens 14 ist so bemessen, dass dieser die auf die Stirnverzahnung 12 wirkenden Kräfte aufnehmen kann. Bei den im Betrieb auftretenden Kräften kommt es daher nicht zu einer plastischen Verformung des Kragens 14. Gleichzeitig ist die axiale Länge des Kragens 14 so bemessen, dass axial auf die Stirnzahnung 12 in Richtung der Radnabe 06 wirkende Kräfte eine elastische Verformung am freien Ende des Kragens bewirken und in hohem Maße auch bis zur Nut 13 wirken. In der Nut 13 befinden sich ein Messelementträger 16 mit einem Messelement 17. Der Messelementträger 16 füllt die Nut 13 fast vollständig aus und besteht aus einem harten Werkstoff. Er fungiert auch als Laufbahn des Lagerinnenringes 03 für eine der beiden Reihen der Kugeln 08. Zwischen dem Messelementträger 16 und dem Kragen 14 ist das Messelement 17 spielfrei angeordnet. Durch die spielfreie Anordnung des Messelementes 17 gegenüber dem harten Messelementträger 16 ist gewährleistet, dass eine auf den Kragen 14 axial in Richtung der Radnabe 06 wirkende Kraft in hohem Maße auf das Messelement 17 einwirkt. Da der Messelementträger 16 gleichzeitig als Laufbahn für die Kugeln 08 fungiert, wird eine axial in Richtung der Radnabe 06 auf den Kragen 14 wirkende Kraft unmittelbar vom Messelementträger 16 auf die Kugeln 08 übertragen, sodass die Kraft nur geringfügig vom Ansatz 04 der Radnabe 06 aufgenommen werden kann. Auch diese konstruktive Gestaltung gewährleistet, dass die axial wirkende Kraft in hohem Maße auf das Messelement 17 wirkt.

Das Messelement 17 weist eine Ringform entsprechende der Nut 13 auf und besteht aus einem Material, welches einen ausgeprägten inversen magnetostriktiven Effekt aufweist. Wirkt eine Kraft auf das Messelement 17, so verändert sich das magnetische Feld des Messelementes 17 aufgrund des inversen magnetostriktiven Effektes.

Das veränderliche magnetische Feld des Messelementes 17 wird mit einem Sensor 18 gemessen. Der Sensor 18 ist am Lageraußenring 07 befestigt und steht dem Messelement 17 gegenüber. Zwischen dem Sensor 18 und dem Messelement 17 ist ein Spalt von wenigen Millimetern vorhanden. Bei dem Sensor 18 handelt es sich um einen magentoresistiven Sensor, wie beispielsweise einen MR-, AMR-, TMR-, CMR- oder GMI-Sensor. Es kann jedoch jeder Sensortyp verwendet werden, mit dem die auftretende Magnetfeldänderung gemessen werden kann; beispielsweise auch ein Sensor, mit dem die induzierte Spannung gemessen wird. Der Sensor 18 ist mit einer Anschlussleitung 19 mit einer Auswerteelektronik (nicht gezeigt) verbunden.

Mit der Lagerungsanordnung 01 ist es möglich, ein Drehmoment, welches auf die Antriebswelle, das Drehgelenk 09, die Radnabe 06 und das Rad wirkt, zu bestimmen. Es können sowohl Antriebsdrehmomente als auch Schleppdrehmomente bestimmt werden. Beide Drehmomentarten bewirken, dass das auftretende Drehmoment an der Stirnverzahnung 12 teilweise in eine zum Drehmoment proportionale, axial wirkende Kraft umgewandelt wird, welche auf das Messelement 17 wirkt. Diese Wirkung wird mit dem Sensor 18 gemessen und der Auswertelektronik signalisiert.

Das Fahrzeug umfasst vorzugsweise drei weitere antreibbare Räder, deren Lagerungseinheiten in gleicher Weise wie die gezeigte Lagerungseinheit 01 ausgeführt sind. Die Auswerteelektronik empfängt die Signale der Sensoren aller vier Lagerungseinheiten. Auf diese Weise kann jederzeit die Momentenverteilung der Räder des Fahrzeuges ermittelt werden. Das Fahrzeug verfügt weiterhin über eine Vorrichtung zur Steuerung der Momentenverteilung. Derartige Steuerungsvorrichtungen nehmen Einfluss u. a. auf das Drehmoment einer Antriebseinrichtung, auf die Einstellungen von Differentialgetrieben, auf Kupplungen zwischen den Antriebswellen und auf einzelne Radbremsen. Da die Momentenverteilung mit Hilfe der Auswerteelektronik permanent gemessen wird, kann ein Regelkreis zur Regelung der Antriebs- und Schleppdrehmomente der Räder des Fahrzeuges aufgebaut werden. Dieser Regelkreis ermöglicht eine genaue Anpassung der Momentenverteilung an die gegebene Fahrsituation.

In der gezeigten Ausführungsform ist eine Sensoreinheit durch das Messelement 17 und den Sensor 18 gebildet. Die Sensoreinheit einer erfindungsgemäßen Vorrichtung zur Regelung der Momentenverteilung kann auch durch andere Anordnungen zur Bestimmung des auf das jeweilige Rad wirkenden Drehmomentes gebildet sein.

Fig. 3 zeigt eine Detailansicht der in den Fig. 1 und 2 gezeigten Lagerungsanordnung. Es ist insbesondere ein Zahn 21 der Stirnverzahnung am Kragen 14 und das Messelement 17 dargestellt. Die Darstellung verdeutlicht, dass die Ausführung des Kragens 14 eine Weiterleitung einer axial wirkenden Kraft auf das Messelement 17 ermöglicht, da der Kragen 14 eine entsprechend kleine Materialstärke aufweist. Ein Pfeil 22 symbolisiert ein zwischen dem Rad und der Antriebswelle wirkendes Drehmoment, welches als seitlich wirkende Kraft auf den Zahn 21 einwirkt. Aufgrund der schrägen Ausführung des Zahnes 21 an seinen Flanken 23 resultiert das Drehmoment 22 in einer axial wirkenden Kraftkomponente, welche durch den Pfeil 24 symbolisiert ist. Das Verhältnis zwischen der seitlich wirkenden Kraft des Drehmomentes 23 zur axial wirkenden Kraft 24 wird durch den Neigungswinkel der Flanken 23 bestimmt.

### Bezugszeichenliste

- 01: Lagerungsanordnung
- 02: Radträger
- 03: Lagerinnenring
- 04: Ansatz an der Radnabe
- 05: -
- 06: Radnabe
- 07: Lageraußenring
- 08: Kugeln
- 09: Drehgelenk
- 10: -
- 11: Schraube
- 12: Stirnverzahnung
- 13: Nut
- 14: Kragen
- 15: -
- 16: Messelementträger
- 17: Messelement
- 18: Sensor
- 19: Anschlussleitung
- 20: -
- 21: Zahn
- 22: Drehmoment
- 23: schräge Flanke
- 24: axiale Kraft

## Patentansprüche

1. Lagerungsanordnung (01) zur Lagerung eines antreibbaren Rades an einem Radträger (02) eines Fahrzeuges, umfassend:
- einen Lagerinnenring (03), der drehfest mit einem Rad verbindbar ist und zur Ubertragung eines Drehmoments über eine Stirnverzahnung (12) mit zur Achsrichtung schrägen Zahnflanken (23) an eine Antriebswelle koppelbar ist,
- einen Lageraußenring (07), der drehfest mit einem Radträger (02) verbindbar ist und gekennzeichnet mit
- einem druckempfindlichen Messelement (17), welches axial neben der Stirnverzahnung (12) und am Kragen (14) des Lagerinnenrings (03) angeordnet ist, für dort auftretende Axialkräfte empfindlich ist, und
- mindestens einem Sensor (18) zur Bestimmung der auf das Messelement (17) einwirkenden Kraft.

2. Lagerungsanordnung (01) nach Anspruch 1, **dadurch gekennzeichnet, dass** eine Ausnehmung (13) zumindest abschnittsweise axial neben der Stirnverzahnung (12) im Lagerinnenring (03) verläuft, in welcher Ausnehmung (13) des Lagerinnenringes (03) das druckempfindliche Messelement (17) angeordnet ist.

3. Lagerungsanordnung (01) nach dem voranstehenden Anspruch, **dadurch gekennzeichnet, dass** die Ausnehmung als Nut (13) ausgebildet ist, die umlaufend im Lagerinnenring (03) und unmittelbar axial neben der Stirnverzahnung (12) angeordnet ist.

4. Lagerungsanordnung (01) nach mindestens einem der voranstehenden Ansprüche, **dadurch gekennzeichnet, dass** der Sensor (18) am Lageraußenring (07) angeordnet ist und dem druckempfindlichen Messelement (17) gegenübersteht.

5. Lagerungsanordnung (01) nach mindestens einem der voranstehenden Ansprüche, **dadurch gekennzeichnet, dass** der Sensor (18) am Lageraußenring (07) angeordnet ist und der Ausnehmung (13) des Lagerinnenringes (03) gegenübersteht.

6. Lagerungsanordnung (01) nach mindestens einem der voranstehenden Ansprüche, **dadurch gekennzeichnet, dass** Wälzkörper (08) zwischen dem Lagerinnenring (03) und dem Lageraußenring (07) angeordnet sind, um gemeinsam ein Wälzlager auszubilden.

7. Lagerungsanordnung (01) nach den voranstehenden Anspruch, **dadurch gekennzeichnet, dass** das Wälzlager als zweireihiges Kugellager ausgeführt ist.

8. Lagerungsanordnung (01) nach mindestens einem der voranstehenden Ansprüche, **dadurch gekennzeichnet, dass** der Lagerinnenring (03) als ein Ansatz (04) an einer Nabe (06) des Rades ausgebildet ist.

9. Lagerungsanordnung (01) nach mindestens einem der voranstehenden Ansprüche, **dadurch gekennzeichnet, dass** am Lagerinnenring (03), insbesondere in der Ausnehmung (13) des Lagerinnenrings (03), weiterhin ein Messelementträger (16) angeordnet ist, wobei das Messelement (17) axial neben dem Messelementträger (16) zwischen diesem und der Stirnverzahnung (12) angeordnet ist.

10. Lagerungsanordnung (01) nach mindestens einem der voranstehenden Ansprüche, **dadurch gekennzeichnet, dass** der Messelementträger (16) gleichzeitig eine Laufbahn für die Wälzkörper (08) bildet.

11. Lagerungsanordnung (01) nach mindestens einem der voranstehenden Ansprüche, **dadurch gekennzeichnet, dass** das Messelement (17) gebildet ist durch einen Messring, der einen inversen magnetostriktiven Effekt aufweist.

12. Lagerungsanordnung (01) nach mindestens einem der voranstehenden Ansprüche, **dadurch gekennzeichnet, dass** das Messelement (17) gebildet ist durch einen Messring, der einen magnetoelastischen Effekt aufweist.

13. Lagerungsanordnung (01) nach mindestens einem der voranstehenden Ansprüche, **dadurch gekennzeichnet, dass** das Messelement (17) gebildet ist durch eine druckempfindliche Beschichtung auf dem Messelementträger (16).

14. Lagerungsanordnung (01) nach mindestens einem der voranstehenden Ansprüche, **dadurch gekennzeichnet, dass** das Messelement (17) gebildet ist durch einen Messring mit druckempfindlichen Sensorelementen, deren Messsignal über den Sensor (18) ausgelesen wird.

15. Lagerungsanordnung (01) nach mindestens einem der voranstehenden Ansprüche, **dadurch gekennzeichnet, dass** der Messring in mehrere Segmente unterteilt ist.

16. Lagerungsanordnung (01) nach mindestens einem der voranstehenden Ansprüche, **dadurch gekennzeichnet, dass** das der Sensor (18) einfach oder zweifach vorhanden ist und sich in einer aufgrund einer Radseitenkraft ergebenden Kippachse befindet.

17. Lagerungsanordnung (01) nach mindestens einem der voranstehenden Ansprüche, **dadurch gekennzeichnet, dass** der Sensor (18) mehrfach vorhanden ist und die Sensoren (18) über den Umfang des Lageraußenringes (07) verteilt ist.

18. Anordnung zur Regelung der Verteilung von Antriebs- und Schleppdrehmomenten von antreibbaren Rädern eines Fahrzeuges mit einer Lageranordnung nach Anspruch 1, umfassend:
- Mittel zur Steuerung der Antriebs- und Schleppdrehmomente der antreibbaren Räder; und
- Mittel zur Messung der Antriebs- und Schleppdrehmomentenverteilung, welche an jedem antreibbaren Rad jeweils eine Sensoreinheit (17, 18) zur Messung des auf das Rad wirkenden Drehmomentes besitzen und wobei die Mittel zur Messung der Antriebs- und Schleppdrehmomentenverteilung in der Lagerungsanordnung integriert sind.

## Claims

1. Bearing arrangement (01) for mounting a drivable wheel on a wheel carrier (02) of a vehicle, comprising:
- a bearing inner ring (03) which can be rotationally fixedly connected to a wheel and which, for the transmission of a torque, can be coupled by means of a spur toothing (12), with tooth flanks (23) which are oblique with respect to the axial direction, to a driveshaft,
- a bearing outer ring (07) which can be rotationally fixedly connected to a wheel carrier (02);
- a pressure-sensitive measuring element (17) which is arranged axially adjacent to the spur toothing (12) and on the collar (14) of the bearing inner ring (03) and which is sensitive to axial forces which occur there; and
- at least one sensor (18) for determining the force acting on the measuring element (17).

2. Bearing arrangement (01) according to Claim 1, **characterized in that** a recess (13) runs at least in sections axially adjacent to the spur toothing (12) in the bearing inner ring (03), in which recess (13) of the bearing inner ring (03) the pressure-sensitive measuring element (17) is arranged.

3. Bearing arrangement (01) according to the preceding claim, **characterized in that** the recess is embodied as a groove (13) which is arranged in an encircling fashion in the bearing inner ring (03) and axially directly adjacent to the spur toothing (12).

4. Bearing arrangement (01) according to at least one of the preceding claims, **characterized in that** the sensor (18) is arranged on the bearing outer ring (07) and is situated opposite the pressure-sensitive measuring element (17).

5. Bearing arrangement (01) according to at least one of the preceding claims, **characterized in that** the sensor (18) is arranged on the bearing outer ring (07) and is situated opposite the recess (13) of the bearing inner ring (03).

6. Bearing arrangement (01) according to at least one of the preceding claims, **characterized in that** rolling bodies (08) are arranged between the bearing inner ring (03) and the bearing outer ring (07) in order, together, to form a rolling bearing.

7. Bearing arrangement (01) according to the preceding claim, **characterized in that** the rolling bearing is designed as a double-row ball bearing.

8. Bearing arrangement (01) according to at least one of the preceding claims, **characterized in that** the bearing inner ring (03) is embodied as a projection (04) on a hub (06) of the wheel.

9. Bearing arrangement (01) according to at least one of the preceding claims, **characterized in that** a measuring element carrier (16) is also arranged on the bearing inner ring (03), in particular in the recess (13) of the bearing inner ring (03), with the measuring element (17) being arranged axially adjacent to the measuring element carrier (16) between the latter and the spur toothing (12).

10. Bearing arrangement (01) according to at least one of the preceding claims, **characterized in that** the measuring element carrier (16) simultaneously forms a raceway for the rolling bodies (08).

11. Bearing arrangement (01) according to at least one of the preceding claims, **characterized in that** the measuring element (17) is formed by a measuring ring which has an inverse magnetostrictive effect.

12. Bearing arrangement (01) according to at least one of the preceding claims, **characterized in that** the measuring element (17) is formed by a measuring ring which has a magnetoelastic effect.

13. Bearing arrangement (01) according to at least one of the preceding claims, **characterized in that** the measuring element (17) is formed by a pressure-sensitive coating on the measuring element carrier (16).

14. Bearing arrangement (01) according to at least one of the preceding claims, **characterized in that** the measuring element (17) is formed by a measuring ring with pressure-sensitive sensor elements whose measurement signal is read out by means of the sensor (18).

15. Bearing arrangement (01) according to at least one of the preceding claims, **characterized in that** the measuring ring is divided into a plurality of segments.

16. Bearing arrangement (01) according to at least one of the preceding claims, **characterized in that** the sensor (18) is provided in single or double form and is situated in a tilt axis which results from a wheel side force.

17. Bearing arrangement (01) according to at least one of the preceding claims, **characterized in that** the sensor (18) is provided in multiple form and the sensors (18) are distributed over the periphery of the bearing outer ring (07).

18. Arrangement for regulating the distribution of drive and drag torques of drivable wheels of a vehicle having a bearing arrangement according to Claim 1, comprising:
- means for controlling the drive and drag torques of the drivable wheels; and
- means for measuring the drive and drag torque distribution, which means have, at each drivable wheel, in each case one sensor unit (17, 18) for measuring the torque acting on the wheel with the means for measuring the drive and drag torque distribution being integrated in the bearing arrangement.

## Revendications

1. Ensemble palier (01) pour le support sur palier d'une roue pouvant être entraînée sur un support de roue (02) d'un véhicule, comportant :
- une bague intérieure de palier (03) qui peut être reliée de manière solidaire en rotation à une roue et peut être accouplée à un arbre d'entraînement, par le biais d'une denture frontale (12) pourvue de flancs de dent (23) inclinés par rapport à la direction axiale, pour la transmission d'un couple,
- une bague extérieure de palier (07) qui peut être reliée de manière solidaire en rotation à un support de roue (02) et **caractérisé par**
- un élément de mesure (17) sensible à la pression, lequel est disposé axialement près de la denture frontale (12) et sur la collerette (14) de la bague intérieure de palier (03) et est sensible aux forces axiales qui s'y produisent et
- au moins un capteur (18) pour la détermination de la force agissant sur l'élément de mesure (17).

2. Ensemble palier (01) selon la revendication 1, **caractérisé en ce qu'**un évidement (13) s'étend, au moins dans certaines sections, axialement près de la denture frontale (12) dans la bague intérieure de palier (03), dans lequel évidement (13) de la bague intérieure de palier (03) est disposé l'élément de mesure (17) sensible à la pression.

3. Ensemble palier (01) selon la revendication précédente, **caractérisé en ce que** l'évidement est réalisé sous forme de rainure (13) qui est disposée de manière périphérique dans la bague intérieure de palier (03) et immédiatement axialement près de la denture frontale (12).

4. Ensemble palier (01) selon au moins l'une quelconque des revendications précédentes, **caractérisé en ce que** le capteur (18) est disposé sur la bague extérieure de palier (07) et est en regard de l'élément de mesure (17) sensible à la pression.

5. Ensemble palier (01) selon au moins l'une quelconque des revendications précédentes, **caractérisé en ce que** le capteur (18) est disposé sur la bague extérieure de palier (07) et est en regard de l'évidement (13) de la bague intérieure de palier (03).

6. Ensemble palier (01) selon au moins l'une quelconque des revendications précédentes, **caractérisé en ce que** des corps de roulement (08) sont disposés entre la bague intérieure de palier (03) et la bague extérieure de palier (07), afin de réaliser conjointement un palier à roulement.

7. Ensemble palier (01) selon la revendication précédente, **caractérisé en ce que** le palier à roulement est réalisé sous forme de palier à billes à deux rangées.

8. Ensemble palier (01) selon au moins l'une quelconque des revendications précédentes, **caractérisé en ce que** la bague intérieure de palier (03) est réalisée sous forme de saillie (04) sur un moyeu (06) de la roue.

9. Ensemble palier (01) selon au moins l'une quelconque des revendications précédentes, **caractérisé en ce qu'**un support d'élément de mesure (16) est en outre disposé sur la bague intérieure de palier (03), en particulier dans l'évidement (13) de la bague intérieure de palier (03), l'élément de mesure (17) étant disposé axialement près du support d'élément de mesure (16) entre celui-ci et la denture frontale (12).

10. Ensemble palier (01) selon au moins l'une quelconque des revendications précédentes, **caractérisé en ce que** le support d'élément de mesure (16) forme en même temps un chemin de roulement pour les corps de roulement (08).

11. Ensemble palier (01) selon au moins l'une quelconque des revendications précédentes, **caractérisé en ce que** l'élément de mesure (17) est formé par une bague de mesure qui présente un effet magnétostrictif inverse.

12. Ensemble palier (01) selon au moins l'une quelconque des revendications précédentes, **caractérisé en ce que** l'élément de mesure (17) est formé par une bague de mesure qui présente un effet magnétoélastique.

13. Ensemble palier (01) selon au moins l'une quelconque des revendications précédentes, **caractérisé en ce que** l'élément de mesure (17) est formé par un revêtement sensible à la pression sur le support d'élément de mesure (16).

14. Ensemble palier (01) selon au moins l'une quelconque des revendications précédentes, **caractérisé en ce que** l'élément de mesure (17) est formé par une bague de mesure pourvue d'éléments de capteur sensibles à la pression, dont le signal de mesure est lu par le biais du capteur (18).

15. Ensemble palier (01) selon au moins l'une quelconque des revendications précédentes, **caractérisé en ce que** la bague de mesure est divisée en plusieurs segments.

16. Ensemble palier (01) selon au moins l'une quelconque des revendications précédentes, **caractérisé en ce que** le capteur (18) est présent une seule fois ou deux fois et se trouve dans un axe de basculement résultant d'une force latérale sur la roue.

17. Ensemble palier (01) selon au moins l'une quelconque des revendications précédentes, **caractérisé en ce que** le capteur (18) est présent plusieurs fois et les capteurs (18) sont répartis sur la périphérie de la bague extérieure de palier (07).

18. Ensemble de régulation de la répartition de couples d'entraînement et résistants de roues pouvant être entraînées d'un véhicule comprenant un ensemble palier selon la revendication 1, comportant :
- des moyens de réglage des couples d'entraînement et résistants des roues pouvant être entraînées ; et
- des moyens de mesure de la répartition des couples d'entraînement et résistants, lesquels possèdent à chaque fois sur chaque roue pouvant être entraînée une unité de capteur (17,18) pour la mesure du couple agissant sur la roue et les moyens de mesure de la répartition des couples d'entraînement et résistants étant intégrés dans l'ensemble palier.
